# EUROPÄISCHE PATENTANMELDUNG

(11) **EP 0 692 443 A2**
(43) Veröffentlichungstag der Anmeldung: **17.01.1996**
(21) Anmeldenummer: 95110600.4
(22) Anmeldetag: 07.07.1995
(51) Int. Cl.: B65G 69/00

(54) **Überladebrücke für Rampen**

(30) Priorität: 16.07.1994 DE 4425202
(71) Anmelder: LAUSEN GmbH, D-47228 Duisburg (DE)
(72) Erfinder: Lausen, Horst, D-47533 Kleve (DE)
(74) Vertreter: Oppermann, Frank

(57) **Zusammenfassung**

Die Überladebrücke für Rampen (2) weist ein an seinem rampenseitigen Ende um eine horizontale Achse (22) schwenkbares Brückenelement (10) auf. Das Brückenelement (10) ist an einem Schlitten (9) gelagert, der in vertikaler Richtung an Säulen (6,6') verschiebbar geführt ist. Die Säulen (6,6) weisen rampen- und brückenseitige Führungsflächen (17,17') auf, an denen sich zu beiden Seiten der Säulen in vertikaler Richtung versetzt zueinander angeordnete Führungselemente (15,15';16,16') abstützen, die schwenkbar an dem Schlitten (9) gelagert sind. Das Brückenelement (10) der Überladebrücke kann sowohl aus seiner Horizontalstellung heraus gekippt werden als auch in vertikaler Richtung verfahren werden. Für den Fall, daß ein Fahrzeug mit einer Ladefläche be- bzw. entladen werden soll, die weit unter dem Niveau des Rampenplateaus (29) liegt, kann das Brückenelement (10) auf die Höhe der Ladefläche (38) abgesenkt werden. Geringfügige Höhenunterschiede lassen sich dann durch Kippen des Brückenelements ausgleichen. Auf diese Weise ist es möglich, an einer Rampe sowohl Fahrzeuge mit einer hohen Ladefläche als auch Fahrzeuge mit einer niedrigen Ladefläche zu be- bzw. entladen.

## Beschreibung

Die Erfindung betrifft eine Überladebrücke für Rampen nach dem Oberbegriff des Patentanspruchs 1.

Zum Be- bzw. Entladen von Fahrzeugen finden Überladebrücken Verwendung, um den Höhenunterschied zwischen der Ladefläche des Fahrzeugs und dem Rampenplateau überbrücken zu können.

Eine Überladebrücke der im Oberbegriff des Patentanspruchs 1 angegebenen Art ist aus EP-A-0 589 283 bekannt. Die bekannte Überladebrücke weist ein Brückenelement auf, das auf die Ladefläche des zu be- bzw. entladenden Fahrzeugs einerseits und das Rampenplateau andererseits aufgelegt wird. Das rampenseitige Ende des Brückenelements ist an der Rampe um eine horizontale Achse schwenkbar gelagert, so daß sich die Brücke aus der waagerechten Lage heraus kippen und auf die Ladefläche des Fahrzeugs auflegen läßt. Nachteilig ist, daß sich mit der bekannten Überladebrücke nur verhältnismäßig geringe Höhenunterschiede überbrücken lassen. Die Ladehöhe der bekannten Überladebrücke ist nämlich durch den maximalen Anstellwinkel des Brückenelements begrenzt.

Der Erfindung liegt die Aufgabe zugrunde, eine universell einsetzbare Überladebrücke zu schaffen, mit der sich auch größere Höhenunterschiede auf einfache Weise überbrücken lassen.

Die Lösung der Aufgabe erfolgt erfindungsgemäß mit den Merkmalen des Patentanspruchs 1.

Bei der erfindungsgemäßen Überladebrücke ist das Brückenelement an einem Schlitten schwenkbar gelagert, der in vertikaler Richtung verschiebbar geführt ist. Damit kann das Brückenelement nicht nur aus seiner Horizontalstellung heraus gekippt werden, sondern auch in vertikaler Richtung verfahren werden. Durch Kippen des Brückenelements, lassen sich geringfügige Höhenunterschiede zwischen dem freien Ende des Brückenelements und dem Rampenplateau ausgleichen. Für den Fall, daß ein Fahrzeug mit einer Ladefläche be- bzw. entladen werden soll, die weit unter dem Niveau des Rampenplateaus liegt, kann das Brückenelement auf die Höhe der Ladefläche abgesenkt werden. Auf diese Weise ist es möglich, an einer Rampe sowohl Fahrzeuge mit einer hohen Ladefläche als auch Fahrzeuge mit einer niedrigen Ladefläche zu be- bzw. entladen.

In einer bevorzugten Ausführungsform der Erfindung ist der Schlitten vorzugsweise an zwei Säulen verschiebbar geführt. Es ist aber auch möglich, daß der Schlitten nur an einer zentralen Säule verschiebbar ist. Der Schlitten weist paarweise angeordnete obere und untere Führungselemente auf, von denen die oberen Führungselemente auf den rampenseitigen Führungsflächen der Säulen und die unteren Führungselemente auf den brückenseitigen Führungsflächen der Säulen verfahrbar sind. Die in vertikaler Richtung versetzt zueinander angeordeneten Führungselemente stützen sich an den Führungsflächen der Säulen ab und nehmen das Kippmoment des Brückenelements auf.

Um Bauteiltoleranzen ausgleichen zu können und ein Verkanten der Führungselemente zu vermeiden sowie eine gleichmäßige Kraftverteilung zu erreichen, sind die Führungselemente an dem Schlitten verschwenkbar gelagert. Beim Anheben und Absenken des Brückenelements können sich die entlang der Führungsflächen der Säulen verschiebbaren Führungselemente somit schrägstellen.

Die Führungselemente sind vorzugsweise auf Rollen verfahrbar. Sie können aber auch mit Gleitflächen versehen sein und auf den Führungsflächen gleiten. Die Zentrierung der Führungselemente erfolgt vorteilhafterweise mit längslaufenden Führungsstegen an den rampen- und/oder brückenseitigen Führungsflächen der Säulen, die in entsprechende Nuten an den Laufflächen der Rollen greifen. Aufgrund der Last des Brückenteils liegen die Führungselemente fest auf den Führungsflächen auf und können sich durch die Zentrierung nicht von den Führungsflächen lösen.

Die Führungselemente sind vorzugsweise Wälzwagen, deren Rollen mit Kettengliedern zu einem Rollenband verbunden sind und auf einem zentralen langgestreckten Wälzkörper abrollen. Die Wälzwagen haben den Vorteil, daß sie bei geringer Bauhöhe große Lasten tragen können. Die entlang der Säulen verfahrbaren Wälzwagen erlauben eine besonders platzsparende Bauweise.

Zum Anheben und Absenken des Brückenelements ist eine Hubeinrichtung vorgesehen, die aus einer Kolben-/Zylinderanordnung oder insbesondere bei größeren Bauhöhen der Überladebrücke auch aus einem Seilzug, einem Kettenantrieb oder einer Spindel bestehen kann. Vorteilhafterweise ist die Hubeinrichtung zum Anheben und Absenken des Brückenelements unterhalb des Schlittens, d.h. im Bereich des rampenseitigen Endes des Brückenelements angeordnet. Dies ist insofern von besonderer Bedeutung, als daß der Raum unterhalb des Brückenelements frei von Antriebsmitteln ist, die beim Be- bzw. Entladen des Fahrzeugs stören.

Zum Kippen des Brückenelements können Kolben-/Zylinderanordnungen vorgesehen sein, die einerseits an dem Brückenelement oder einem starren nach unten weisenden Ausleger des Brückenelements und andererseits an den unteren brückenseitigen Führungselementen angreifen. Vorzugsweise ist an jeder Längsseite des Brückenelements eine Kolben-/Zylinderanordnung angeordnet. Es ist aber auch möglich, daß eine zentrale Kolben-/Zyinderanordnung vorgesehen ist, die zwischen den Säulen an dem Schlitten angreift.

Im folgenden wird unter Bezugnahme auf die Zeichnungen ein Ausführungsbeispiel der Erfindung näher erläutert.

Es zeigen:
- Fig. 1: eine Seitenansicht der vor einer Rampe befindlichen Überladebrücke in abgesenkter Stellung,
- Fig. 2: einen Schnitt entlang der Linie II-II von Fig. 1.
- Fig. 3: einen Schnitt entlang der Linie III-III von Fig. 1,
- Fig. 4: den Ausschnitt A von Fig. 3 in vergrößerter Darstellung,
- Fig. 5: den Ausschnitt B von Fig. 4 in vergrößerter Darstellung, und
- Fig. 6: ein Führungselement in der Ansicht aus der Richtung des Pfeils VI von Fig. 5.

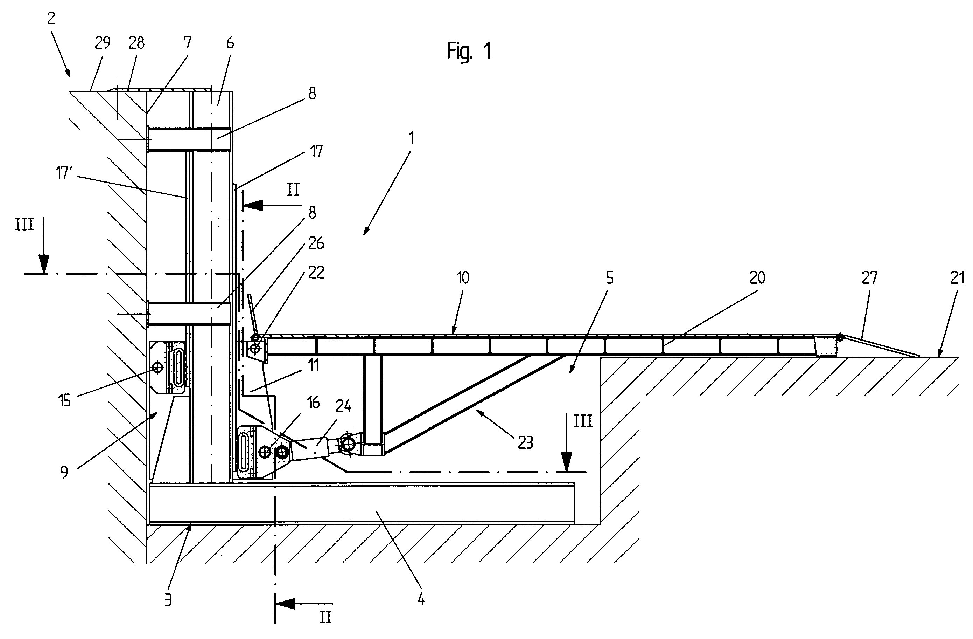

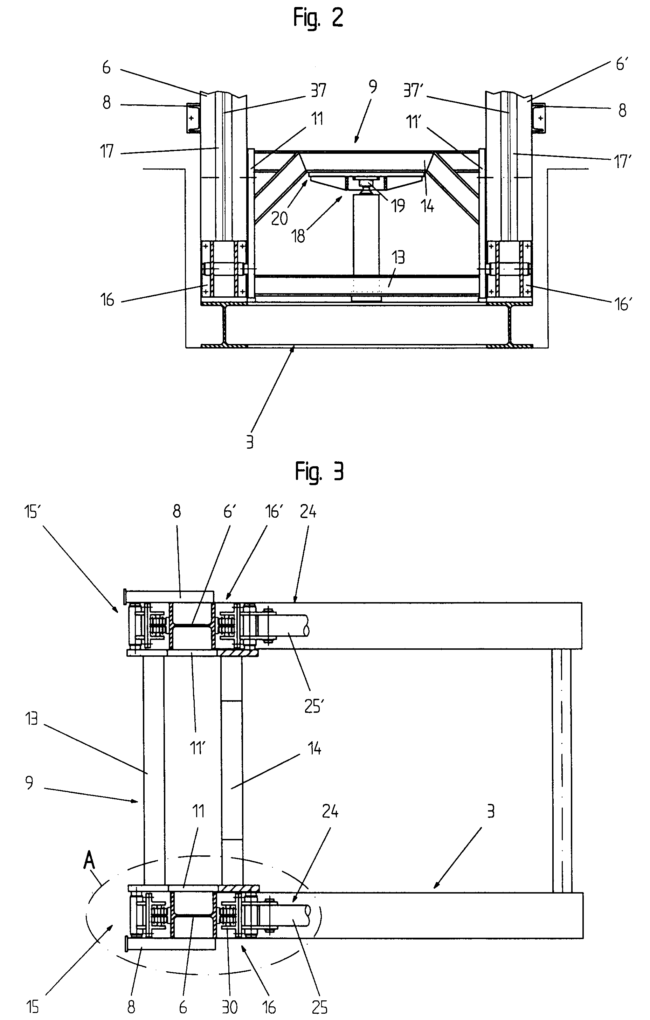

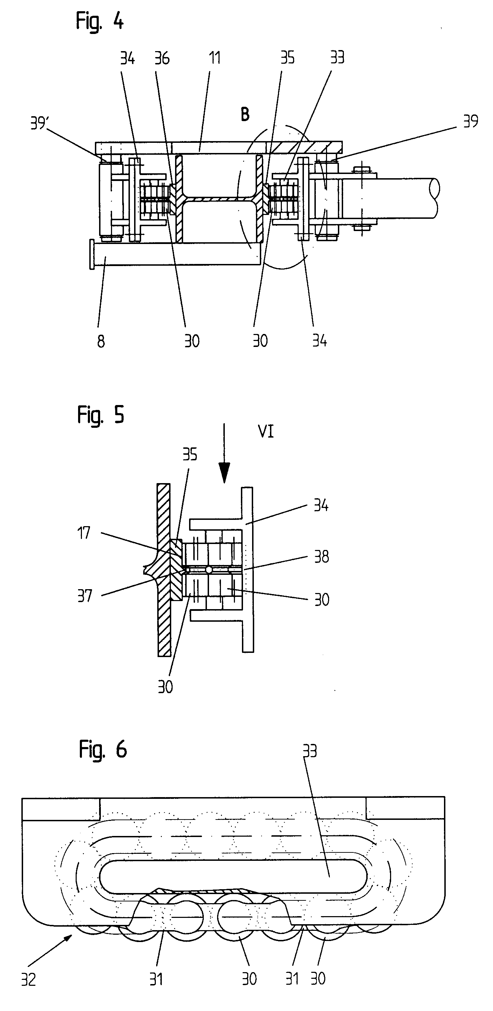

Fig. 1 zeigt eine Seitenansicht der Überladebrücke 1 für eine Rampe 2 in abgesenkter Stellung. Der Fußteil 3 der Überladebrücke besteht aus Stahlprofilen 4, die zu einem Rahmen zusammengesetzt sind, der am Boden einer vor der Rampe 2 befindlichen Ladegrube 5 mit in Fig. 1 nicht dargestellten Ankerschrauben fest verankert ist. Die Profile 4 des Fußteils 3 werden vorzugsweise mit einer Vergußmasse vergossen. Die Überladebrücke 1 weist ferner zwei senkrecht auf dem rahmenförmigen Fußteil 3 stehende Säulen 6,6' in Form von Doppel-T-Profilen auf (Fign. 2 und 3). Diese befinden sich im Bereich der rampenseitigen Ecken der Ladegrube 5 und sind mit der Wand 7 der Rampe 2 mittels der Querstützen 8 fest verbunden. An den beiden Säulen 6,6' ist ein Schlitten 9 in vertikaler Richtung verschiebbar geführt, der das Brückenelement 10 der Überladebrücke trägt. Der Schlitten 9 weist zwei senkrechte die Säulen 6,6' seitlich überragende Seitenplatten 11, 11' auf, die mit Querträgern 13,14 zu einem winkelfesten Gestell verbunden sind. An den Außenseiten der Seitenplatten 11,11' sind jeweils zwei in vertikaler Richtung versetzt zueinander angeordnete Führungselemente 15,16 bzw. 15',16' um eine horizontale Achse schwenkhar gelagert. Dabei stützen sich die oberen Führungselemente 15,15' des Schlittens 9 auf den rampenseitigen Führungsflächen 17' der Säulen 6,6' ab und sind entlang der Säulen verfahrbar, während sich die unteren Führungselemente 16,16' an den brückenseitigen Führungsflächen der Säulen abstützen und entlang der Säulen verfahrbar sind. Bei den Führungselementen handelt es sich um Wälzwagen, die im einzelnen noch unter Bezugnahme auf die Fign. 4 bis 6 beschrieben werden.

Die Hubeinrichtung 18 zum Anheben und Absenken des Schlittens 9 besteht aus einer unterhalb des Schlittens 9 angeordneten Kolben-/Zylinderanordnung mit einem teleskopartig ausfahrbaren Kolben 19, der an der oberen Quertraverse 14 des Schlittens angreift.

Das Brückenelement 10 der Überladebrücke ist mit querverlaufenden Rippen 20 versteift und erstreckt sich über die Ladegrube 5 hinaus bis zu der vor der Ladegrube befindlichen Fahrbahn 21. Am rampenseitigen, hinteren Ende ist das Brückenelement 10 um eine querverlaufende horizontale Achse 22 schwenkbar an dem Schlitten 9 gelagert.

An jeder Längsseite des Brückenelements 10 ist jeweils ein starrer sich nach unten erstreckender Ausleger 23 angebracht. Zum Kippen des Brückenelements 10 sind ferner zu beiden Seiten des Brückenelements angeordnete Kolben-/Zylinderanordnungen 24,24' vorgesehen. Die Kolben 25, 25' der Kolben-/Zylinderanordnungen 24,24' sind gelenkig mit den unteren Enden der Ausleger 23 verbunden, während die Zylinder an die unteren Führungselemente 16,16' des Schlittens 9 angelenkt sind. Durch Ausfahren der Kolben 25,25' der Kolben-/Zylinderanordnungen 24,24' kann das Brückenelement 10 aus seiner waagerechten Neutralstellung heraus gekippt werden. An dem rampenseitigen Ende und dem freien Ende des Brückenelements 10 befinden sich um eine horizontale Achse schwenkbare Klappauffahrten 26,27, die über in den Fign. nicht gezeigte Antriebsmittel bewegt werden können. Ferner ist ein Auffahrtblech 28 vorgesehen, das sich auf den Säulen 6,6' einerseits und dem Rampenplateau 29 andererseits abstützt.

Unter Bezugnahme auf die Fign. 3 bis 6 wird nachfolgend die Führung des Schlittens 9 im einzelnen beschrieben. Die zu beiden Seiten der Säulen 6,6' angeordneten Führungselemente 15,15' bzw. 16,16' weisen zahlreiche Rollen 30 auf, die durch Kettenglieder 31 untereinander verbunden ein Rollenband 32 bilden. Die Rollen 30 laufen um einen zentralen langgestreckten Wälzkörper 33, der in einer nur andeutungsweise dargestellten Halterung 34 fixiert ist, die gelenkig an der Seitenplatte 11 bzw. 11' des Schlittens 9 aufgehängt ist. Die Halterungen 34 sind an den Gelenken 39,39' befestigt und um eine horizontale Achse drehbar. An den rampenseitigen Gelenken 39' sind ferner die Kolben-/Zylinderanordnungen 24,24' zum Kippen des Brückenelements 10 angelenkt. Die rampen- und brückenseitigen Führungsflächen 17',17 der Säulen 6,6' werden durch Führungsleisten 35,36 gebildet, die auf die Doppel-T-Profile aufgebracht sind. Die Leisten 35,36 weisen längslaufende Führungsstege 37 auf, die in entsprechende Nuten 38 an den Laufflächen der Rollen 30 greifen und die unter der Last des Brückenelements 10 auf den Führungsflächen 17,17' der Säulen 6,6' abrollenden Rollen zentrieren. Damit die Rollen 30 nicht von dem Wälzkörper 33 abrutschen können, ist auch an dem Wälzkörper 33 ein umlaufender Führungssteg vorgesehen.

Wenn sich die Überladebrücke 1 in ihrer abgesenkten Stellung befindet, liegt das freie Ende des Brückenelements auf der Fahrbahn 21 auf und die vordere Klappauffahrt 26 ist heruntergeklappt, so daß das Brückenelement 10 z.B. mit einem Palettenwagen beladen werden kann (Fig. 1). Nach dem Beladen des Brückenelements 10 kann dieses dann zum Entladen auf die Höhe des Rampenplateaus angehoben werden.

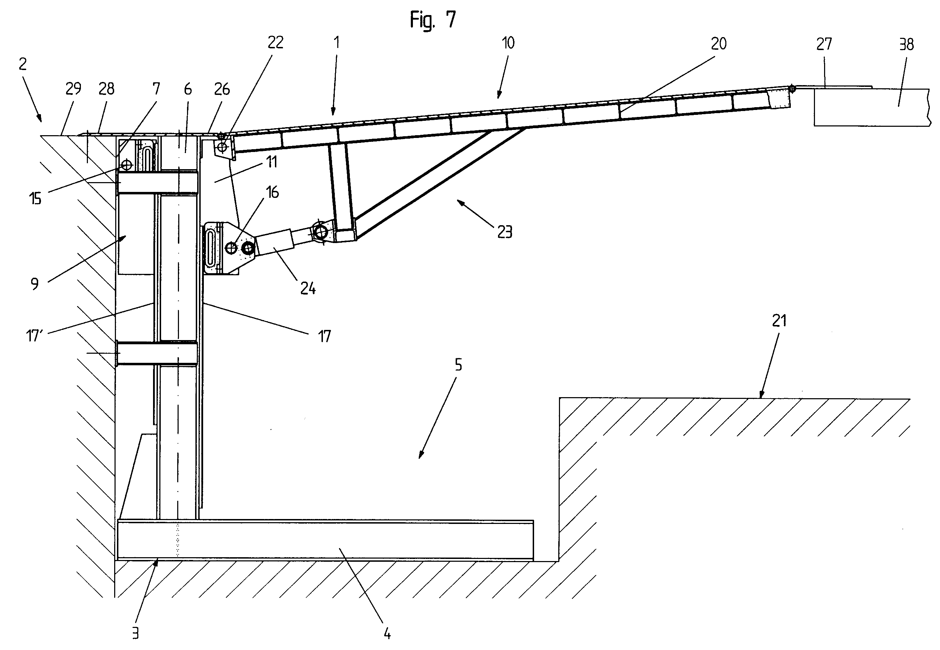

Fig. 7 zeigt das Brückenelement 10 in der angehobenen Stellung beim Be- bzw. Entladen eines Fahrzeugs. In dieser Position schließt sich die rampenseitige Klappauffahrt 26 an das Auffahrtblech 28 an, während die Klappauffahrt 27 am freien Ende des Brückenelements 10 auf der in Fig. 7 nur andeutungsweise dargestellten Ladefläche 38 des Fahrzeugs aufliegt. Der verhältnismäßig geringe Höhenunterschied zwischen der Ladefläche 38 des Fahrzeugs und dem freien Ende des Brückenelements 10 wird durch Kippen des Brückenelements ausgeglichen. Für den Fall, daß ein Fahrzeug be- bzw. entladen werden soll, dessen Ladefläche 38 sich weit unterhalb der Höhe des Rampenplateaus 29 befindet, kann das Brückenelement in vertikaler Richtung auf die Höhe der Ladefläche 38 verfahren werden, wobei sich geringfüge Höhenunterschiede wieder durch Kippen des Brückenelements 10 ausgleichen lassen. Auf diese Weise ist es möglich, an einer Rampe sowohl Fahrzeuge mit einer hohen Ladefläche als auch Fahrzeuge mit einer niedrigen Ladefläche zu be- bzw. entladen.

## Patentansprüche

1. Überladebrücke für Rampen (2) mit einem an seinem rampenseitigen Ende um eine horizontale Achse (22) verschwenkbar gelagerten Brückenelement (10),
**dadurch gekennzeichnet**,
daß das Brückenelement (10) an einem Schlitten (9) verschwenkbar gelagert ist, der in vertikaler Richtung verschiebbar geführt ist.

2. Überladebrücke nach Anspruch 1, dadurch gekennzeichnet, daß der Schlitten (9) an Säulen (6,6') verschiebbar geführt ist, die jeweils eine rampenseitige und eine brückenseitige Führungsfläche (17',17) aufweisen, und daß der Schlitten (9) sich an den rampenseitigen Führungsflächen (17') der Säulen (6,6') abstützende und entlang der Führungsflächen verfahrbare obere Führungselemente (15,15') und sich an den brückenseitigen Führungsflächen (17) abstützende und entlang der Führungsflächen verfahrbare untere Führungselemente (16,16') aufweist.

3. Überladebrücke nach Anspruch 2, dadurch gekennzeichnet, daß die Führungselemente (15,15';16,16') an dem Schlitten (9) verschwenkbar gelagert sind.

4. Überladebrücke nach Anspruch 2 oder 3, dadurch gekennzeichnet, daß die Führungselemente (15,15';16,16') auf Rollen (30) verfahrbar sind.

5. Überladebrücke nach Anspruch 4, dadurch gekennzeichnet, daß die Rollen (30) der Führungselemente (15,15';16,16') auf ihrer Lauffläche jeweils eine Nut (38) aufweisen, und daß die rampen- und/oder brückenseitigen Führungsflächen (17',17) der Säulen (6,6') mit längslaufenden Führungsstegen (37,37') versehen sind, die in die Nuten (38) der Rollen (30) eingreifen.

6. Überladebrücke nach Anspruch 4 oder 5, dadurch gekennzeichnet, daß die Rollen (30) der Führungselemente (15,15';16,16') ein Rollenband (32) bilden, das um einen langgestreckten Wälzkörper (33) geführt ist.

7. Überladebrücke nach einem der Ansprüche 1 bis 6, dadurch gekennzeichnet, daß eine Hubeinrichtung (18) zum Anheben und Absenken des Brückenelements(10) unterhalb des Schlittens (9) angeordnet ist.

8. Überladebrücke nach einem der Ansprüche 2 bis 7, dadurch gekennzeichnet, daß an den unteren Führungselementen (15,15') einerseits und an dem Brückenelement (10) andererseits angreifende Kolben-/Zylinder Anordnungen (24,24') vorgesehen sind.

9. Überladebrücke nach Anspruch 8, dadurch gekennzeichnet, daß an den Langsselten des Brückenelements(10) nach unten weisende Ausleger (23) vorgesehen sind, an denen die Kolben-/Zylinderanordnungen (24,24') angreifen.
